(19) Europäisches Patentamt
European Patent Office
Office européen des brevets

(11) EP 2 865 694 B1

(12) FASCICULE DE BREVET EUROPEEN

(45) Date de publication et mention de la délivrance du brevet:
**17.08.2016 Bulletin 2016/33**

(21) Numéro de dépôt: **14189273.7**

(22) Date de dépôt: **16.10.2014**

(51) Int Cl.:
***C08G 18/10*** *(2006.01)*
***C08G 18/12*** *(2006.01)*
***C09D 175/04*** *(2006.01)*
***C09D 175/08*** *(2006.01)*
***C08G 18/42*** *(2006.01)*
***C09J 175/04*** *(2006.01)*
***C09J 175/06*** *(2006.01)*
***C08L 75/04*** *(2006.01)*
***C08L 75/06*** *(2006.01)*

# (54) PSA d'origine renouvelable à pouvoir adhésif stable en température

PSA aus natürlicher Quelle mit temperaturstabilen Klebstoffeigenschaften

PSA of renewable origin with temperature-stable adhesive power

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2013 FR 1360359**

(43) Date de publication de la demande:
**29.04.2015 Bulletin 2015/18**

(73) Titulaire: **BOSTIK SA**
**93210 La Plaine Saint Denis (FR)**

(72) Inventeurs:
- **Laferte, Olivier**
**60350 TROSLY BREUIL (FR)**
- **Fouquay, Stéphane**
**76130 MONT SAINT AIGNAN (FR)**

(74) Mandataire: **Granet, Pierre et al**
**Arkema France**
**420, rue d'Estienne d'Orves**
**92705 Colombes Cedex (FR)**

(56) Documents cités:
**EP-A1- 2 390 299**
**EP-A1- 2 468 783**
**US-A- 4 468 492**
**US-B2- 8 535 798**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 865 694 B1

## Description

La présente invention a pour objet une composition adhésive réticulable par chauffage comprenant des polymères à terminaison alkoxysilanes hydrolysables, qui peut être obtenue, au moins en partie, à partir de matières premières d'origine renouvelable. Cette composition permet, après enduction, l'obtention d'un support autoadhésif dont le pouvoir adhésif est maintenu dans un large domaine de température. L'invention concerne également ledit support autoadhésif, ainsi que son utilisation pour la fabrication d'étiquettes et/ou de rubans auto-adhésifs.

On connaît déjà, par les demandes WO 09/106699 et EP2336208 des compositions adhésives à base de polyuréthane (ou polyéther) à terminaison alkoxysilanes hydrolysables, dont l'enduction sur un support et le chauffage conduisent, au terme d'une réaction chimique de réticulation mise en oeuvre en présence d'humidité atmosphérique, à l'obtention d'un support auto-adhésif qui présente des propriétés avantageuses de pouvoir adhésif et de pouvoir collant immédiat (dénommé également « tack »). Du fait de ces propriétés, ledit support auto-adhésif peut être utilisé pour la fabrication d'étiquettes et/ou de rubans auto-adhésifs.

Le joint adhésif qui assure la fixation dudit support auto-adhésif sur un substrat est donc formé par cette réaction de réticulation. Il revêt, de ce fait, une structure de réseau polymérique tridimensionnel comprenant des liaisons siloxane et a également l'avantage de conserver le pouvoir adhésif requis dans un large domaine de température. Cela permet d'envisager l'utilisation dudit support auto-adhésif dans toutes les applications où un article revêtu de l'étiquette et/ou du ruban est exposé à des températures très variables, y compris très éloignées de la température ambiante. On peut citer à titre d'exemple la pose d'étiquettes sur certains organes des automobiles (ou autres véhicules) situés à proximité du moteur, ou sur des emballages conçus pour recevoir durant leur conditionnement un liquide chaud, ou encore sur des articles (tels les pneumatiques) qui sont étiquetés à chaud, au sortir des chaînes de fabrication. On peut également citer la mise en oeuvre de rubans auto-adhésifs pour l'assemblage de pièces pour lesquelles une bonne tenue thermique est nécessaire comme dans le cas, par exemple, de l'habillage intérieur des avions ou autres véhicules.

La composition divulguée par la demande WO 09/106699 comprend de 20 à 85 % d'un polyuréthane avec 2 groupes terminaux alkoxysilane hydrolysables dont le procédé d'obtention comprend la réaction d'un diisocyanate avec un polyéther diol, plus particulièrement un polyoxyalkylène diol, comme le polypropylène glycol.

Toutefois, les polyoxyalkylènes diols sont fabriqués par polymérisation d'oxydes d'alkylène, eux-mêmes obtenus uniquement à partir de matières premières d'origine non renouvelable, notamment à partir de l'éthylène et du propylène issus du vapocraquage du naphta ou du gaz naturel.

La composition divulguée par la demande EP2336208 qui comprend de 20 à 85 % d'un polyéther avec 2 groupes terminaux alkoxysilane hydrolysables, est également obtenue à partir d'un polyoxyalkylène diol et présente donc le même inconvénient que la composition divulguée par la demande WO 09/106699.

Or, dans le cadre actuel du développement d'une chimie "verte" permettant la fabrication de composition adhésive, on cherche de plus en plus à éviter le recours à des matières premières non renouvelables (d'origine pétrolière ou fossile), ou tout au moins à diminuer leur part pondérale dans ladite composition. On cherche ainsi à mettre en oeuvre, pour la fabrication de ladite composition, davantage de matières premières renouvelables, d'origine végétale ou animale.

L'invention a pour but de proposer des compositions adhésives réticulables à chaud qui offrent des propriétés similaires à celles des compositions connues de l'art antérieur, tout en remplaçant, au moins en partie, les polymères à terminaisons alkoxysilanes hydrolysables mis en oeuvre dans lesdites compositions, par des polymères à terminaisons alkoxysilanes hydrolysables qui peuvent être fabriqués à partir de matières premières renouvelables.

La présente invention a donc pour objet, en premier lieu, une composition adhésive réticulable par chauffage comprenant :

- (a) de 35 à 75 % poids/poids d'une composition (A) comprenant au moins 90 % poids/poids de polyuréthanes à terminaisons alkoxysilanes hydrolysables de formule (I) :

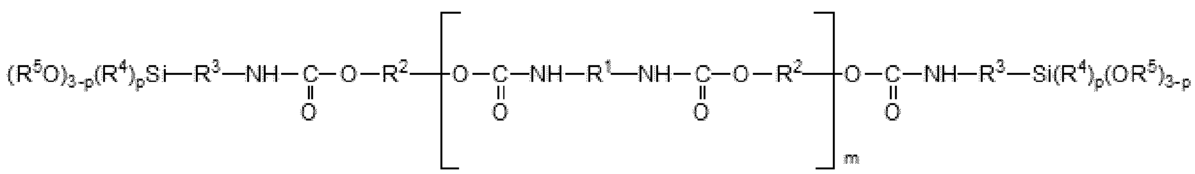

(I)

dans laquelle :

- $R^1$ représente un radical divalent hydrocarboné comprenant de 5 à 15 atomes de carbone qui peut être aromatique ou aliphatique, linéaire, ramifié ou cyclique;
- $R^2$ représente un bloc polyester divalent qui est dérivé d'un polyester diol de formule $R^2(OH)_2$ par remplacement de chacun des 2 groupes hydroxyle par une valence libre ;
- $R^3$ représente un radical divalent alkylène linéaire comprenant de 1 à 3 atomes de carbone ;
- $R^4$ et $R^5$, identiques ou différents, représentent chacun un radical alkyle linéaire ou ramifié de 1 à 4 atomes de carbone, avec la possibilité lorsqu'il y a plusieurs radicaux $R^4$ (ou $R^5$) que ceux-ci soient identiques ou différents ;
- m est un nombre entier tel que la masse molaire moyenne en nombre des polyuréthanes de formule (I) est comprise entre 900 Da et 27 kDa ;
- p est un nombre entier égal à 0, 1 ou 2 ;

ladite composition (A) étant obtenue en outre par un procédé qui comprend une étape de préparation d'une composition (A-1) de polyesters diols de formule $R^2(OH)_2$ en faisant réagir par une réaction de polycondensation :

- (i) un ou plusieurs acides gras dimérisés compris dans une composition (A-1-1) ayant un indice d'acide $I_A$ compris entre 190 et 200 mg KOH/g avec un ou plusieurs diols comprenant de 2 à 44 atomes de carbone et éventuellement un ou plusieurs hétéroatomes choisis parmi l'oxygène et le soufre ; ou bien
- (ii) un ou plusieurs alcool gras dimérisés compris dans une composition (A-1-2) ayant un indice d'hydroxyle $I_{OH}$ compris entre 200 et 220 mg KOH/g avec un ou plusieurs acides dicarboxyliques comprenant de 4 à 44 atomes de carbone et éventuellement un ou plusieurs hétéroatomes choisis parmi l'oxygène et le soufre ;

de telle sorte que ladite composition (A-1) ait un indice d'hydroxyle $I_{OH}$ compris entre 15 et 35 mg KOH/g et une viscosité Brookfield mesurée à 80°C inférieure à 10 Pa.s ;

- (b) de 22 à 62 % poids/poids d'une résine tackifiante compatible (B) de masse molaire moyenne en nombre comprise entre 200 Da et 10 kDa ; et
- (c) de 0,01 à 3 % poids/poids d'un catalyseur de réticulation (C).

La composition adhésive selon l'invention peut, de façon très avantageuse, être préparée à partir de matières premières dont certaines, notamment les acides gras dimérisés ou les alcools gras dimérisés mis en oeuvre pour la fabrication de la composition (A), sont d'origine naturelle et renouvelable. De plus, ladite composition adhésive conduit, après enduction sur un support et réticulation, à la formation d'un support auto-adhésif qui présente des propriétés de pouvoir adhésif et de tack du même niveau que celles obtenues avec les compositions adhésives enseignées par les demandes WO 09/106699 et EP2336208.

Dans le présent texte :

- les masses molaires moyennes en nombre indiquées pour les polymères sont déterminées par chromatographie à perméation de gel dans le THF (ou GPC, également appelée chromatographie par exclusion de taille ou SEC), avec étalonnage par rapport à un polystyrène standard de poids moléculaire externe certifié ;
- les viscosités Brookfield indiquées sont mesurées selon la norme DIN ISO 2555 par un viscosimètre Brookfield RTV, éventuellement équipé (selon la température de mesure) d'un système Thermosel.

**<u>1. Composition (A) de polyuréthanes de formule (I)</u>** ::

Les radicaux et groupes définis précédemment dans la formule générale (I) conservent la même signification dans la présente description, en l'absence d'indication contraire.

La composition (A) de polyuréthanes à terminaisons alkoxysilanes de formule (I) peut être préparée selon un procédé en 3 étapes séquentielles.

**1$^{ère}$ étape :** Préparation d'une composition (A-1) d'indice hydroxyle $I_{OH}$ compris entre 15 et 35 mg KOH/g et comprenant au moins 90 % poids/poids de polyesters diols de formule $R^2(OH)_2$ :

**Variante (i)** : Polyesters diols de formule $R^2(OH)_2$ obtenus selon le procédé (i) :

Selon cette 1$^{ère}$ variante, on fait donc réagir par une réaction de polycondensation :

- un ou plusieurs acide gras dimérisé compris dans une composition (A-1-1) ayant un indice d'acide $I_A$ compris entre 190 et 200 mg KOH/g, avec
- un ou plusieurs diols comprenant de 2 à 44 atomes de carbone et éventuellement un ou plusieurs hétéroatomes

choisis parmi l'oxygène et le soufre.

**Description des acides gras dimérisés :**

Lesdits acides gras dimérisés sont compris à raison d'au moins 92 % poids/poids, de préférence au moins 95%, dans la composition (A-1-1) et sont mis à réagir avec un excès stoechiométrique desdits diols.

Lesdits acides gras dimérisés compris dans la composition (A-1-1) sont connus également de l'homme de l'art sous la dénomination d' « acides gras dimères » ou encore « dimères d'acides gras ». Lesdits acides désignent les produits de dimérisation des acides gras mono- ou poly-insaturés comprenant de 1 à 3 doubles liaisons et/ou des esters correspondants.

Les acides gras dimérisés préférés sont obtenus à partir d'acide gras de C6 à C22, de préférence de C10 à C22 et plus particulièrement de C14 à C22 riches en chaines alkyles en C18 insaturées.

On peut citer à titre d'exemple les produits de dimérisation :

- de l'acide oléïque, de l'acide linoléïque, de l'acide linolénique, de l'acide palmitoléïque, de l'acide élaïdique ;
- des mélanges d'acides gras insaturés obtenus par hydrolyse des graisses et des huiles naturelles telles que les huiles de tournesol, de soja, d'olive, de colza, de lin, de palme, de coton, de jojoba, de maïs, de pin, de pépins de raisin et de tallol qui est un sous-produit de la fabrication de la pâte à papier ;

ainsi que les acides gras dimérisés saturés correspondants, obtenus par hydrogénation en utilisant un catalyseur au Nickel.

Ces acides gras insaturés sont extraits de ces produits naturels, par exemple sous forme d'esters méthyliques par transestérification au méthanol des triglycérides correspondants, suivie d'une saponification des esters méthyliques correspondants.

Les acides gras insaturés ainsi obtenus en mélange sont alors oligomérisés par chauffage selon une réaction de condensation sur les doubles liaisons, qui conduit à la formation de mélanges techniques contenant environ 25 % d'acides monocarboxyliques (acides monomères) souvent isomérisés par rapport aux acides de départ, 70 % d'acides dicarboxyliques (acides dimères) avec le double de nombre de carbone par rapport aux acides de départ et 5 % d'acides tricarboxyliques (acides trimères) ayant le triple de nombre de carbone par rapport aux acides de départ. Par purification de ce mélange, on obtient les différents grades commerciaux d'acides dimères, monomères ou trimères qui peuvent exister sous forme hydrogénée ou non hydrogénée.

Les dimères d'acides gras sont isolés par distillation de ces derniers mélanges, pour former les dimères porteurs de 2 fonctions carboxyliques (acides dicarboxyliques) présents à raison d'au moins 92 % poids/poids, de préférence au moins 95 %, dans une composition qui est utilisable en tant que composition (A-1-1) pour la préparation de la composition (A-1) de polyesters diols, conformément à la variante (i) de la 1ère étape du procédé d'obtention de la composition (A).

Les formules suivantes sont données à titre illustratif de quelques acides gras dimérisés :

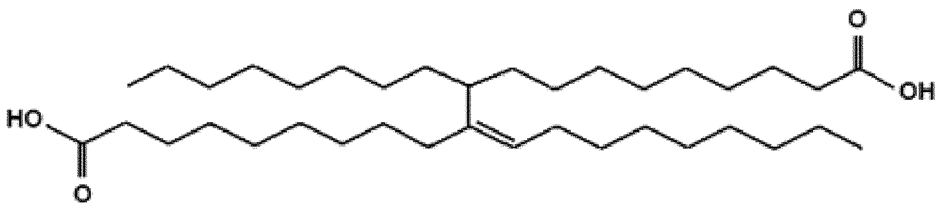

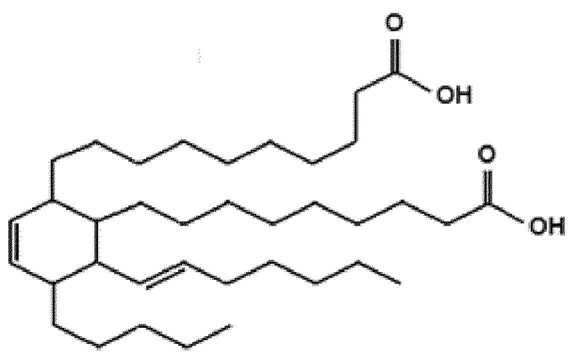

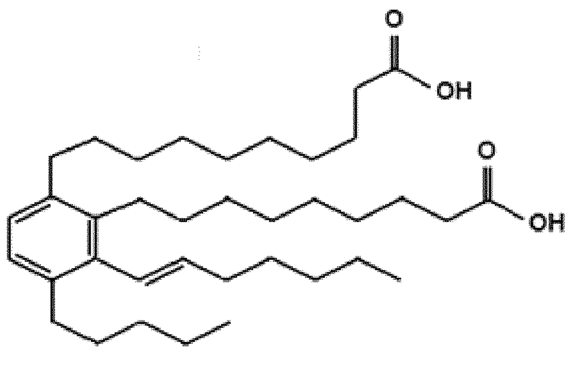

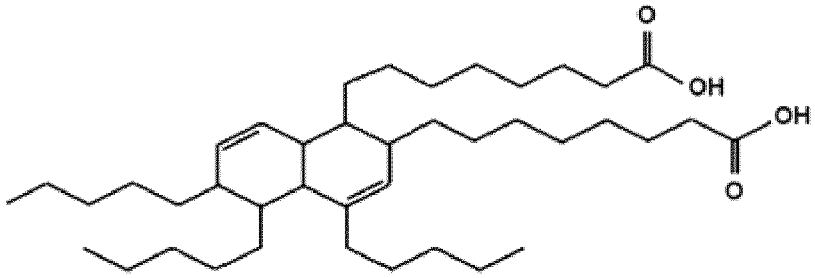

De nombreuses compositions de tels acides gras dimérisés sont disponibles commercialement, parmi lesquelles on peut citer les produits de la gamme Pripol®, distribuée par la société Croda, et notamment le Pripol® 1013 qui est une composition comprenant de 95 à 98 % d'acides gras dimérisés dont l'indice d'acide $I_A$ est compris entre 194 et 198 mg KOH/g. Cette dernière composition est plus particulièrement préférée.

L'indice d'acide $I_A$ est le nombre de fonction carboxylique par gramme d'acides gras dimérisés de (A1-1), le dit nombre étant exprimé sous la forme d'équivalent en milligrammes de KOH nécessaire pour neutraliser l'acidité de 1 gramme de corps gras, déterminé par titrimétrie. Le dit nombre est relié à la masse molaire moyenne en nombre M par la relation :

$$I_A = 56{,}1x2000/M$$

**Description des diols :**

Les (ou le) diols mis en oeuvre peuvent être aromatiques ou aliphatiques, saturés ou insaturés, linéaires, ramifiés ou alicycliques.

Ils sont par exemple choisis parmi les composés suivants : l'éthylène glycol, le diéthylène glycol, le triéthylène glycol, le tétraéthylène glycol, le 1,2-propanediol, le dipropylène glycol, le tripropylène glycol, le tétrapropylène glycol, le polypropylène glycol de masse molaire 400 g/mole, le tétraméthylène glycol, le polytétraméthylène glycol, le 1,3-propanediol, le 2-butyl-2-éthyl-1,3-propanediol, le 2-méthyl-1,3-propanediol, le 2,2-diméthyl-1,3-propanediol, le 2-éthyl-1,3-propanediol, le 1,2-butanediol, le 1,4-butanediol, le 1,5-pentanediol, le 2-méthyl-1,5-pentanediol, le 3-méthyl-1,5-pentanediol, le 1,4-hexanediol, le 1,6-hexanediol, le 1,10-décanediol, le cyclohexanediméthanol, le 1.6-hexanediol, le néopentyl glycol, le 1-9-nonanediol, le 1,10-décanediol, le 2,2,4,4-tétraméthyl-1,3-cyclobutanediol, le 1,4-cyclohexanediol, le bisphenol-A hydrogéné, le bisphenol-F hydrogéné, les dicidols (mélange d'isomères de 3,8-bis(hydroxyméthyl)-tricyclo[5.2.1.0]décane, 4,8-bis(hydroxyméthyl)-tricyclo[5.2.1.0]décane et de 5,8-bis-hydroxyméthyl)-tricyclo[5.2.1.0]décane), les polycarbonate diols, et les alcools gras dimères ayant de 28 à 44 atomes de carbone.

Selon une alternative de cette variante (i), la composition (A-1-1) d'acides gras dimérisés peut être tout d'abord convertie en une composition du chlorure correspondant par action du trichlorure de phosphore ($PCl_3$), conformément au procédé décrit dans la demande internationale WO 01/04080. C'est cette composition de chlorure d'acides gras dimérisés que l'on fait alors ensuite réagir avec les diols précités pour former la composition (A-1) de polyesterdiols de formule $R^2(OH)_2$.

**Variante** (ii) : Polyesters diols de formule $R^2(OH)_2$ obtenus selon le procédé (ii) :

Selon cette 2ème variante, on fait donc réagir par une réaction de polycondensation :

- un ou plusieurs alcool gras dimérisés compris dans une composition (A-1-2) ayant un indice d'hydroxyle $I_{OH}$ compris entre 200 et 220 mg KOH/g, avec
- un (ou plusieurs) acides dicarboxyliques comprenant de 4 à 44 atomes de carbone et éventuellement un ou plusieurs hétéroatomes choisis parmi l'oxygène et le soufre.

**Description des alcools gras dimérisés :**

Lesdits alcools gras dimérisé sont compris à raison d'au moins 92 % poids/poids, de préférence au moins 95%, dans la composition (A-1-2) et sont mis à réagir en excès stoechiométrique avec lesdits acides.

Ces alcools gras dimérisés sont obtenus à partir des dimères d'acides gras sous forme de diester méthylique qui ont été décrits précédemment, par une hydrogénation catalytique. Cette hydrogénation conduit à la réduction des 2 fonctions esters en 2 fonctions -OH. Ces alcools gras dimérisés sont donc obtenus sous la forme d'une composition dont ils constituent au moins 92 % poids/poids (de préférence au moins 95 %), et qui est utilisable en tant que composition (A-1-2) pour la mise en oeuvre de la variante (ii) de cette 1ère étape.

Des compositions de tels alcools gras dimérisés sont également disponibles commercialement, comme par exemple le Pripol® 2033 qui est une composition comprenant au moins 96 % d'alcools gras dimérisés aliphatiques dont l'$I_{OH}$ est compris entre 202 et 212 mg KOH/g. Cette composition est plus particulièrement préférée.

L'indice d'hydroxyle $I_{OH}$ est le nombre de fonctions hydroxyle par gramme d'alcools gras dimérisés de (A-1-2), le dit nombre étant exprimé sous la forme d'équivalent en milligrammes de KOH utilisés dans le dosage des fonctions hydroxyle, déterminé par titrimétrie.

Le dit nombre est relié à la masse molaire moyenne en nombre M par la relation :

$$I_{OH} = 56,1x2000/M$$

**Description des diacides :**

Le (ou les) diacides carboxyliques mis en oeuvre peuvent être aromatiques ou aliphatiques, saturés ou insaturés, linéaires, ramifiés ou alicycliques.

Ils sont par exemple choisis parmi :

- des acides dicarboxyliques insaturés comme par exemple l'acide citraconique, l'acide fumarique, l'acide itaconique, l'acide maléique, l'acide mésaconique ;
- des acides dicarboxyliques aromatiques tels que les acides phthalique, isophthalique, téréphthalique ;
- des acides dicarboxyliques aliphatiques ou cycloaliphatiques comme l'acide 1,3- ou 1,4-cyclohexane dicarboxylique, l'acide adipique, l'acide glutarique, l'acide succinique, l'acide fumarique, l'acide sébacique, l'acide 3-méthyl-1,5-pentanedicarboxylique, l'acide 1,10-décanedicarboxylique, l'acide 1,12-dodécanedicarboxylique, les acides gras dimères ayant de 28 à 44 atomes de carbone, l'acide 1,18-octadécanedicarboxylique, l'acide méthyltétrahydrophthalique, l'acide hexahydrophthalique, l'acide tetrahydrophthalique, l'acide azélaique.

Dans cette étape de préparation de la composition (A-1) de polyesters diols de formule $R^2(OH)_2$, on fait réagir, selon la variante concernée :

- pour la variante (i) : les acides gras dimérisés de la composition (A-1-1) avec un excès stoechiométrique d'un (ou plusieurs) diol, ou bien
- pour la variante (ii) : un (ou plusieurs) diacide dicarboxylique avec un excès stoechiométrique des alcools gras dimérisés de la composition (A-1-2).

Cela signifie que les quantités pondérales des 2 réactifs mises en oeuvre (pour chacune des 2 variantes) correspondent à un excès du nombre de moles équivalent de fonctions -OH par rapport au nombre de mole équivalent de groupes -COOH.

Plus précisément, les quantités pondérales des réactifs à charger dans le réacteur sont déterminées sur la base du rapport p nombre de moles équivalent de fonctions -OH/ nombre de moles équivalent de fonctions -COOH.

Ce rapport p est défini comme étant égal :

- pour la 1ère variante : au nombre total de mole équivalent de fonctions -OH présentes dans le (ou les) diol, divisé par le nombre total de mole équivalent de fonctions -COOH présentes dans la composition d'acides gras dimérisés (A-1-1) déterminé à partir du poids de ladite composition et de son indice d'acide $I_A$;
- pour la 2ème variante : au nombre total de mole équivalent de fonctions -OH présentes dans la composition d'alcools gras dimérisés (A-1-2.) déterminé à partir du poids de ladite composition et de son indice d'hydroxyle $I_{OH}$, divisé par le nombre équivalent de fonctions -COOH présentes dans le (ou les) acide dicarboxylique.

La nature du (ou des) diols pour la variante (i), ou du (ou des) acides dicarboxyliques pour la variante (ii), ainsi que la valeur du rapport p sont choisis de telle sorte que la composition (A-1) de polyesters diols de formule $R^2(OH)_2$ ait :

- un indice d'hydroxyle $I_{OH}$ compris entre 15 et 35 mg KOH/g, de préférence entre 16 et 25 mg KOH/g, et
- une viscosité Brookfield mesurée à 80°C inférieure à 10 Pa.s, de préférence inférieure à 6 Pa.s.

Ladite viscosité est mesurée par un viscosimètre de type Brookfield équipé du système Thermosel destiné aux mesures de viscosité à haute température, muni d'une aiguille A27 tournant à une vitesse adaptée à la sensibilité du capteur (en moyenne 10 tr/min).

La valeur du rapport p est généralement comprise entre 1,08 et 1,41, et de préférence entre 1,08 et 1,28.

Les alcools gras dimérisés ou les diols non réagis sont, le cas échéant, partiellement éliminés par distillation, et l'on obtient ainsi une composition (A-1) comprenant au moins 90 % poids/poids, de préférence au moins 95 % poids/poids, de polyester diols de formule $R^2(OH)_2$.

**2ème étape :** Préparation d'une composition (A-2) comprenant au moins 90 % poids/poids de polyuréthanes à terminaisons hydroxyles :

On traite la composition (A-1) comprenant les polyesters diols obtenue précédemment avec le diisocyanate de formule (II) :

$$NCO\text{-}R^1\text{-}NCO \qquad (II)$$

dans des quantités correspondant à un rapport équivalent molaire des nombres de fonctions NCO/OH compris entre 0,3 et 0,7 et de préférence égal à environ 0,5 ;
de manière à obtenir les polyuréthanes à terminaisons hydroxyles de formule (III) :

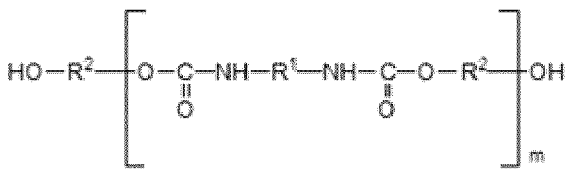

(III)

dans laquelle, de préférence, m est inférieur ou égal à 10.

Toutefois, il reste également, à l'issue de cette 2ème étape, des polyesters diols non réagis de formule $R^2(OH)_2$, de sorte que la composition (A-2) comprend également une quantité résiduelle desdits polyesters diols.

Les polyuréthanes à terminaison hydroxyle de formule (III) sont compris dans la composition (A-2) à raison d'au moins 90 % poids/poids, de préférence au moins 95 % poids/poids.

Selon une variante préférée, le radical $R^1$ est choisi parmi l'un des radicaux divalents suivants dont les formules ci-dessous font apparaître les 2 valences libres :

- a) le radical divalent dérivé de l'isophorone :

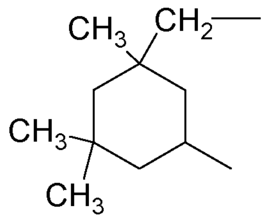

- b)

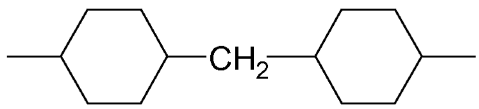

- c)

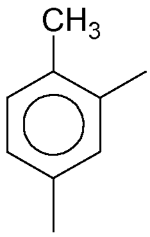

ou

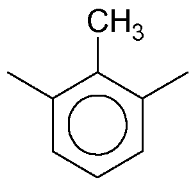

- d)

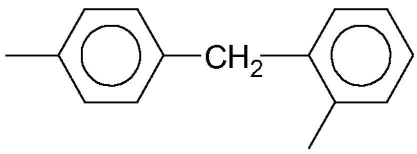

ou

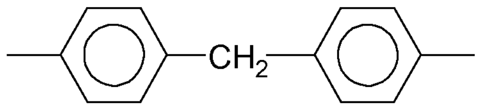

- e)

$-(CH_2)_6-$

(ou radical hexaméthylène).

Selon une variante tout particulièrement préférée, $R^1$ est le radical divalent dérivé de l'isophorone :

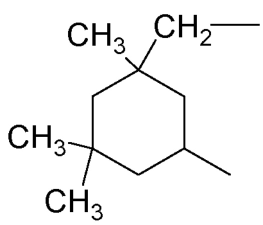

**3ème étape :** Obtention de la composition (A) comprenant au moins 90 % poids/poids des polyuréthanes à terminaisons alkoxysilanes de formule (I) :

On traite la composition (A-2) de polyuréthanes à terminaison hydroxyle obtenue à la 2ème étape avec l'isocyanatosilane de formule (IV) :

$$NCO\text{-}R^3\text{-}Si(R^4)_p(OR^5)_{3-p} \qquad (IV)$$

à raison d'une quantité correspondant à un rapport équivalent molaire des nombres de fonctions NCO/OH comprise entre 0,90 et 1,05 et de préférence égal à environ 1.

On obtient ainsi les polyuréthanes à terminaisons alkoxysilanes de formule (I) compris à raison d'au moins 90 % poids/poids dans la composition (A), de préférence à raison d'au moins 95 % poids/poids.

Selon une variante préférée, dans la formule (I) m est inférieur ou égal à 10.

Selon une autre variante préférée :

- $R^3$ est le radical divalent méthylène ou n-propylène ;
- $R^4$ et $R^5$ représentent chacun le radical méthyle ou éthyle ; et/ou
- p égale 0 ou 1.

Selon une variante encore plus préférée :

- $R^3$ est le radical n-propylène, et
- le groupe $-Si(R^4)_p(OR^5)_{3-p}$ est le radical triméthoxysilyl.

Ces variantes préférées sont obtenues en utilisant l'isocyanatosilane ayant la formule (IV) appropriée.

Les $2^{ème}$ et $3^{ème}$ étapes du procédé qui viennent d'être décrites sont conduites dans des conditions anhydres, de manière à éviter l'hydrolyse des groupes alkoxysilanes. Un domaine de température typique pour la mise en oeuvre de ces étapes réactionnelles est de 30° à 120°C, et plus particulièrement de 60 à 105°C. La $2^{ème}$ étape du procédé est avantageusement mise en oeuvre en présence d'un catalyseur organo métallique.

**2. Résine tackifiante compatible (B) :**

En ce qui concerne la ou les résines tackifiantes (B) qui sont comprises dans la composition selon l'invention, on entend désigner par les termes "résine tackifiante compatible" une résine tackifiante qui, lorsqu'elle est mélangée dans les proportions 50%/50% avec la composition (A), donne un mélange substantiellement homogène.

Les résines (B) sont avantageusement choisies parmi :

- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène, ledit procédé pouvant également comprendre une réaction avec des phénols ;
- (iii) les colophanes d'origine naturelle ou modifiées (telles que par exemple la colophane extraite de la gomme de pins, la colophane de bois extraite des racines de l'arbre) et leurs dérivés hydrogénés, dimérisés, polymérisés ou estérifiés par des monoalcools ou des polyols (comme le glycérol) ;
- (iv) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (v) les résines terpéniques, résultant généralement de la polymérisation d'hydrocarbures terpéniques comme par exemple le mono-terpène (ou pinène) en présence de catalyseurs de Friedel-Crafts ;
- (vi) les copolymères à base de terpènes naturels, par exemple le styrène/terpène, l'alpha-méthyl styrène/terpène et le vinyl toluène/terpène ; ou bien
- (vii) les résines acryliques ayant une viscosité à 100°C inférieure à 100 Pa.s.

Selon une variante particulièrement préférée de la composition adhésive selon l'invention, on utilise comme résine (B) une résine de type (iii) ou de type (v). On peut donner comme exemple de résine de type (iii) qui est disponible commercialement la Dertoline® G2L de la Société DRT qui est une colophane estérifiée au glycérol.

**3. Catalyseur de réticulation (C) :**

Le catalyseur de réticulation (C) utilisable dans la composition selon l'invention peut être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR® AA75 auprès de la société DuPont), de l'aluminium comme le chélate d'aluminium (disponible commercialement sous la dénomination K-KAT® 5218 auprès de la société King Industries), des amines comme le 1,8-diazobicyclo (5.4.0) undécène-7 ou DBU.

La composition adhésive réticulable à chaud selon l'invention comprend de préférence :

- (a) de 40 à 65 % poids/poids de composition (A) de polyuréthanes à terminaisons alkoxysilanes hydrolysables,
- (b) de 33 à 58 % poids/poids de résine tackifiante (B), et
- (c) de 0,45 à 2,5% poids/poids de catalyseur de réticulation (C).

Cette variante permet l'obtention de propriétés avantageuses pour le joint adhésif combinée à une part pondérale élevée des ingrédients d'origine renouvelable.

**4. Autres ingrédients de la composition selon l'invention :**

La composition selon l'invention peut inclure jusqu'à 15 % poids/poids d'un polymère de formule (V) :

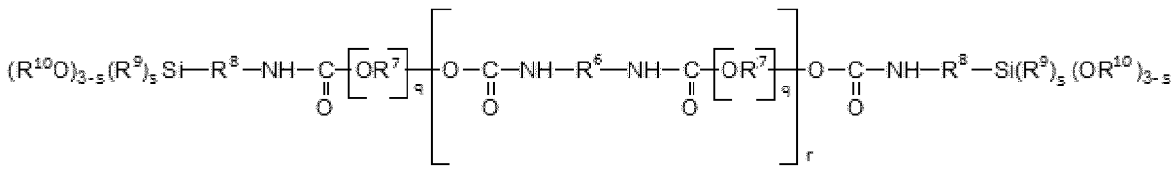

(V)

dans laquelle :

- $R^6$ représente un radical divalent hydrocarboné comprenant de 5 à 15 atomes de carbone qui peut être aromatique ou aliphatique, linéaire, ramifié ou cyclique;
- $R^7$ représente un radical divalent alkylène linéaire ou ramifié comprenant de 1 à 4 atomes de carbone ;
- $R^8$ représente un radical divalent alkylène linéaire comprenant de 1 à 3 atomes de carbone ;
- $R^9$ et $R^{10}$, identiques ou différents, représentent chacun un radical alkyle linéaire ou ramifié de 1 à 4 atomes de carbone, avec la possibilité lorsqu'il y a plusieurs radicaux $R^9$ (ou $R^{10}$) que ceux-ci soient identiques ou différents ;
- q est un nombre entier tel que la masse molaire moyenne en nombre du bloc polyéther de formule $-[OR^7]_q-$ est comprise entre 300 Da et 30 kDa ;
- r est ou bien égal à 0 ou bien un nombre entier non nul tel que la masse molaire moyenne en nombre du polymère de formule (V) est comprise entre 600 Da et 60 kDa ;
- s est un nombre entier égal à 0, 1 ou 2.

Le polymère de formule (V) peut être préparé selon le procédé décrit dans les demandes de brevet EP 2336208 ou WO 2009/106699 selon qu'il s'agit, respectivement, d'un polyéther (cas où r égale 0) ou d'un polyuréthane (cas où r représente un nombre entier non nul).

De préférence, le polymère est un polyéther, correspondant à la formule (V) dans laquelle r égale 0.

Selon une variante davantage préférée, le (ou les) polyéther de formule (V) a l'une et/ou l'autre des caractéristiques suivantes :

- $R^7$ est choisi parmi les radicaux divalents : éthylène, isopropylène, n-propylène, n-butylène, éthyl-éthylène ;
- $R^8$ est le radical méthylène ou n-propylène ;
- $R^9$ et $R^{10}$, identiques ou différents, représentent chacun un radical méthyle ou éthyle.

Selon une variante encore davantage préférée, le (ou les) polyéther de formule (V) est tel que :

- $R^7$ est le radical isopropylène ;
- $R^8$ est le radical méthylène ;
- s = 0 ou 1 ; et
- $R^9$ et $R^{10}$ représentent chacun le radical méthyle.

Certains polyéthers de formule (V) sont disponibles commercialement, tel le GENIOSIL® STP-E30, disponible auprès de la société Wacker. Ce polymère est un polyéther de formule (V) dans laquelle r égale 0, s égale 1, $R^7$ est le radical isopropylène, $R^8$ est le radical méthylène, $R^9$ et $R^{10}$ représentent le radical méthyle. Ce polyéther a pour viscosité (mesurée à 23°C) 30 Pa.s, et pour masse moléculaire en nombre 38 kDa.

Selon une autre variante préférée, le polyéther de formule (V) est tel que sa masse molaire moyenne en nombre varie de 30 à 40 kDa et sa viscosité, mesurée à 23°C, de 30 à 37 Pa.s.

Selon une variante également avantageuse, le polyéther de formule (V) a un indice de polymolécularité allant de 1 à 2. L'indice de polymolécularité est le rapport de la masse moléculaire moyenne en poids à la masse moléculaire moyenne en nombre. Dans ce cas, le polyéther de formule (V) dans laquelle r égale 0 peut être préparé à partir d'un polyéther diol de formule $H\text{-}[OR^7]_q\text{-}OH$ ayant lui-même un indice de polymolécularité allant de 1 à 2. Ce dernier polyéther diol peut être obtenu, de façon connue, par polymérisation de l'oxyde d'alkylène correspondant en présence d'un catalyseur à base d'un double complexe métal-cyanure. Des produits commerciaux correspondants sont également disponibles sous la dénomination ACCLAIM® de la société Bayer.

A titre optionnel, la composition selon l'invention peut également inclure des polymères thermoplastiques souvent utilisés dans la préparation des HMPSA, tels que l'Ethylène Vinyl Acétate (EVA) ou des copolymères blocs styréniques.

La composition adhésive réticulable à chaud selon l'invention peut en outre comprendre jusqu'à 3 % d'un dérivé alkoxysilane hydrolysable, en tant qu'agent dessicant, et de préférence un dérivé de triméthoxysilane. Un tel agent prolonge avantageusement la durée de conservation de la composition selon l'invention durant le stockage et le transport, avant son utilisation. On peut citer par exemple le gamma-métacryloxypropyltriméthoxysilane disponible sous la dénomination commerciale Silquest® A-174 auprès de la société US Momentive Performance Materials Inc.

La composition selon l'invention peut aussi inclure un plastifiant tel qu'un phtalate ou un benzoate, une huile paraffinique et naphténique (comme le Primol® 352 de la société ESSO) ou encore une cire d'un homopolymère de polyethylène (comme l'A-C® 617 de Honeywell), ou une cire d'un copolymère de polyéthylène et d'acétate de vinyle, ou encore des pigments, des colorants ou des charges.

Enfin, une quantité de 0,1 à 2 % d'un ou plusieurs stabilisants (ou anti-oxydants) est de préférence incluse dans la composition selon l'invention. Ces composés sont introduits pour protéger la composition d'une dégradation résultant d'une réaction avec de l'oxygène qui est susceptible de se former par action de la chaleur ou de la lumière. Ces composés peuvent inclure des anti-oxydants qui piègent les radicaux libres, comme par exemple les Irganox® 245 et Irganox® 1010. Ces anti-oxydants peuvent être utilisés seuls ou en combinaison avec d'autres anti-oxydants ou des stabilisants UV.

**5. Préparation de la composition selon l'invention :**

La composition adhésive réticulable à chaud selon l'invention peut être préparée par un procédé qui comprend :

- une étape de mélange à l'abri de l'air, de préférence sous atmosphère inerte, de la composition (A) de polyuréthanes de formule (I) avec le polymère de formule (V) (le cas échéant) et la ou les résines tackifiantes (B), à une température comprise entre 50 et 170°C, de préférence entre 100 et 170°C, puis
- une étape de refroidissement dudit mélange à une température allant de 50 à 90°C, et avantageusement d'environ 70 °C, puis
- une étape d'incorporation dans ledit mélange du catalyseur (C) et, le cas échéant, de l'agent dessicant et des autres composants optionnels.

On obtient avantageusement ainsi une composition dont la viscosité Brookfield mesurée à 100°C est comprise entre 9 et 100 Pa.s, la rendant apte à son enduction sur une couche support. Ladite viscosité est mesurée, selon la norme DIN ISO 2555, par un viscosimètre Brookfield RTV équipé du système Thermosel destiné aux mesures de viscosité à haute température, muni d'une aiguille A27 tournant à une vitesse adaptée à la sensibilité du capteur (en moyenne 10 tr/min).

La présente invention a également pour objet un support auto-adhésif susceptible d'être obtenu par le procédé comprenant :

- (a) le préchauffage à une température comprise entre 50 et 130°C de la composition adhésive telle que définie précédemment, puis
- (b) son enduction sur une couche support, puis
- (c) sa réticulation, par chauffage du support ainsi enduit à une température comprise entre 50 et 150°C.

L'étape (b) d'enduction de la couche support est réalisée au moyen de dispositifs d'enduction connus, comme par exemple une buse à lèvre ou de type rideau, ou encore au rouleau. Elle met en oeuvre un grammage de composition adhésive allant de 3 à 500 $g/m^2$, de préférence de 10 à 250 $g/m^2$. Le matériau utilisable pour la couche support est par exemple du papier ou un film d'un matériau polymère à une ou plusieurs couches.

Le temps nécessaire à la réticulation de l'étape (c) peut varier dans de larges limites, par exemple entre 1

seconde et 10 minutes, en fonction du grammage de composition adhésive déposé sur la couche support, de la température de chauffage, et de l'humidité relative.

Cette étape de réticulation thermique a pour effet la création - entre les chaînes polymériquesà terminaisons aloxysilanes hydrolysables de la composition (A) et sous l'action de l'humidité atmosphérique- des liaisons de type siloxane qui conduisent à la formation d'un réseau polymérique tri-dimensionnel. La composition adhésive ainsi réticulée est un adhésif sensible à la pression qui confère à la couche support qui en est revêtue le pouvoir adhésif et le tack désirables.

Ainsi, un support de PolyEthylèneTéréphtalate (PET) d'épaisseur 50 μm, revêtu à raison d'un grammage de 50 g/m$^2$, présente une adhésion permanente sur un substrat d'acier inoxydable correspondant à un pouvoir adhésif (mesuré par le test de pelage à 180° sur acier inoxydable décrit ci-après) avantageusement compris entre 1 et 10 N/cm. Le tack de ce même support à température ambiante (mesuré par le test d'adhésion instantanée de la boucle décrit ci-après) est avantageusement compris entre 1 et 10 N/cm$^2$.

Enfin, le joint de colle formé après application sur un substrat de la couche support revêtue de la composition réticulée assure la fixation de ladite couche support dans un domaine de température allant de -60°C à +200°C.

Le support auto-adhésif selon l'invention peut également comprendre une couche anti-adhérente protectrice recouvrant la couche de PSA et appliquée (ou laminée) sur celle-ci par simple pression.

La présente invention concerne également l'utilisation du support auto-adhésif défini précédemment pour la fabrication d'étiquettes et/ou rubans auto-adhésifs à simple ou double face.

Le grammage de composition adhésive réticulable à chaud nécessaire pour la fabrication d'étiquettes auto-adhésives peut aller de 10 à 100 g/m$^2$, de préférence de 20 à 50 g/m$^2$. Celui nécessaire pour la fabrication de rubans auto-adhésifs peut varier dans un domaine beaucoup plus large allant de 3 à 500 g/m$^2$, de préférence de 15 à 250 g/m$^2$ par face.

Les exemples suivants sont donnés à titre purement illustratif de l'invention et ne sauraient être interprétés pour en limiter la portée.

Exemple A (référence) : préparation d'une composition (A) comprenant au moins 90 % poids/poids de polyuréthanes à terminaisons alkoxysilanes hydrolysables de formule (I), obtenue à partir de tripropylèneglycol et d'une composition de chlorure d'acides gras dimérisés préparée à partir du Pripol® 1013 :

1$^{ère}$ étape : préparation (selon la variante (i)) d'une composition (A-1) ayant un indice hydroxyle $I_{OH}$ égal à 18 mg KOH/g et comprenant au moins 90% poids/poids de polyesters diols obtenus par condensation du tripropylèneglycol et de chlorures d'acides gras dimérisés issus du Pripol® 1013:

Dans un réacteur double enveloppe de 2 litre équipé d'une agitation, d'un moyen de chauffe, d'un thermomètre, d'un condenseur et relié à une pompe à vide, on introduit 572 g (1 mole) de la composition d'acides gras dimères Pripol® 1013 ayant un indice d'acide de 196 mg KOH/g, laquelle est portée à 85°C sous pression réduite de 20 mbar avec une fuite d'azote durant 1 heure afin de la déshydrater.

On dilue la composition d'acides gras dimères préalablement déshydratée et refroidie à 40°C dans 500 ml de dichlorométhane puis on ajoute 250 g de chlorure de thionyle (2,10 mole) à température ambiante (23°C). Après 2 heures sous agitation à température ambiante, on élimine le dichlorométhane et l'excès de chlorure de thionyle par distillation sous pression réduite de 20 mbar.

On obtient 600 g d'une composition de chlorures d'acides gras dimérisés ayant un indice d'acide de 196 mg KOH/g.

542 g (0,89 mole) de cette composition de chlorure d'acides gras dimères et 192,3 g (1,00 mole) de tripropylène glycol ($I_{OH}$ de 584 mg KOH/g) sont introduits dans un réacteur double enveloppe de 1 litre. Le milieu réactionnel est ensuite porté jusqu'à 120°C sous couverture d'azote, sous agitation mécanique et sous vide partiel de 10 mbar pour éliminer le HCl formé. La réaction de condensation est poursuivie pendant environ 6 heures jusqu'à réaction complète de la composition de chlorure d'acides.

Une fois la réaction terminée, le milieu réactionnel est refroidi à environ 85°C, l'acidité résiduelle neutralisée au bicarbonate de sodium puis filtré.

On obtient 672 g d'une composition ayant un indice hydroxyle $I_{OH}$ égal à 18 mg KOH/g, une viscosité Brookfield mesurée à 80°C de 4295 mPa.s et comprenant au moins 90% poids/poids de polyesters diols.

La part de matières premières d'origine renouvelable dans la composition (A-1) ainsi obtenue est de 74 % poids/poids.

2ème étape : Préparation d'une composition (A-2) comprenant au moins 90 % poids/poids de polyuréthanes à terminaisons hydroxyles de formule (III) :

Dans un réacteur fermé de 250 ml équipé d'une agitation, de moyens de chauffe, d'un thermomètre et relié à une pompe à vide, on introduit 190,14 g de la composition obtenue à la 1ère étape (contenant un nombre équivalent total de fonctions - OH égal à 61 mmol). L'ensemble est chauffé à 85°C et maintenu à pression réduite de 20 mbar durant 1 heure pour déshydrater les polyesters polyols.

On introduit alors dans le réacteur maintenu à pression atmosphérique et porté à une température de 90°C :

- 20 mg d'un catalyseur de carboxylate de bismuth/zinc (Borchi® Kat VP0244 de la société Borchers GmbH), et
- 3,4 g de diisocyanate d'isophorone (ou IPDI, titrant 37,6 % poids/poids en groupe -NCO), contenant 30,52 mmoles de fonctions -NCO.

Les quantités introduites correspondent ainsi à un ratio molaire NCO/OH égal à 0,5.

La réaction de polyaddition est poursuivie durant 3 heures jusqu'à consommation complète des fonctions -NCO du diisocyanate d'isophorone (détectée par la disparition de la bande -NCO à l'analyse Infra-rouge).

On obtient 193,56 g d'une composition (A2-2) ayant une teneur en fonction - OH de 0,158 mmol/g, et comprenant au moins 90 % de polyuréthanes à terminaisons hydroxyles.

La part de matières premières d'origine renouvelable dans la composition (A-2) ainsi obtenue est de 72,7 % poids/poids.

3ème étape : Obtention de la composition (A) comprenant au moins 90% poids/poids de polyuréthanes à terminaisons alkoxysilanes hydrolysables de formule (I) :

On introduit dans le réacteur de la 2ème étape 6,45 g de gamma-isocyanato-n-propyl-triméthoxysilane (titrant 19,9 % en poids/poids de groupe -NCO), soit 30,58 mmoles de NCO correspondant à un ratio NCO/OH égal à 1.

Le réacteur est alors maintenu sous atmosphère inerte à 100°C pendant 1 heure et demie jusqu'à réaction complète (détectée par la disparition de la bande -NCO à l'analyse Infra-rouge).

On obtient 200,01 gramme d'une composition visqueuse à température ambiante, dont la viscosité à 100°C est de 16850 mPa.s (mesurée au viscosimètre Brookfield avec une aiguille 27 tournant à raison de 20 tr/min) comprenant au moins 90 % poids/poids de polyuréthanes à terminaisons alkoxysilanes hydrolysables de formule (I).

La part pondérale de cette composition qui est obtenue à partir de matières premières renouvelables est de 70,3 % poids/poids.

Exemple B (référence) : préparation d'une composition (A) comprenant au moins 90 % poids/poids de polyuréthanes à terminaisons alkoxysilanes hydrolysables de formule (I), obtenue à partir de 3-méthyl-1,5-pentanediol et d'une composition de chlorure d'acides gras dimérisés préparée à partir du Pripol® 1013 :

On répète la 1ère étape de l'exemple A avec 118,2 g (1,00 mole) de 3-méthyl-1,5-pentanediol ($I_{OH}$ de 950 mg KOH/g) et 537 g (0,88 mole) de la composition de chlorure d'acides gras dimérisés ayant un indice d'acide de 196 mg KOH/g.

On obtient 594 g d'une composition (A-1) ayant un indice hydroxyle $I_{OH}$ égal à 22,5 mg KOH/g, une viscosité Brookfield mesurée à 80°C de 5536 mPa.s et comprenant au moins 90% poids/poids de polyesters diols.

On répète ensuite également la 2ème puis la 3ème étape en adaptant les quantités de réactifs de manière à maintenir un ratio NCO/OH égal, respectivement, à 0,5 et 1.

On obtient une composition visqueuse à température ambiante, dont la viscosité à 100°C est de 22700 mPa.s (mesurée au viscosimètre Brookfield à 100°C, avec une aiguille 27 tournant à raison de 20 tr/min).

Cette composition comprend au moins 90 % poids/poids de polyuréthanes à terminaisons alkoxysilanes hydrolysables de formule (I).

La part pondérale de cette composition qui est obtenue à partir de matières premières renouvelables est de 78,9 % poids/poids.

Exemple C (référence) : préparation d'une composition (A) comprenant au moins 90 % poids/poids de polyuréthanes à terminaisons alkoxysilanes hydrolysables de formule (I), obtenue à partir du Pripol® 2033 et du chlorure d'acide 3-méthyl-1,5-pentane dicarboxylique :

On répète la 1ère étape de l'exemple A avec 159,3 g (0,87 mole) de chlorure d'acide 3-méthyl-1,5-pentane dicarboxylique, et 542 g (1,00 mole) d'alcools gras dimères Pripol® 2033 ($I_{OH}$ de 207 mg KOH/g).

On obtient 625,4 g d'une composition ayant un indice hydroxyle $I_{OH}$ égal à 22,5 mg KOH/g, une viscosité Brookfield mesurée à 80°C de 5640 mPa.s et comprenant au moins 90% poids/poids de polyesters diols.

On répète ensuite également la 2$^{ème}$ puis la 3$^{ème}$ étape en adaptant les quantités de réactifs de manière à maintenir un ratio NCO/OH égal, respectivement, à 0,5 et 1.

On obtient une composition visqueuse à température ambiante, dont la viscosité à 100°C est de 21150 mPa.s (mesurée au viscosimètre Brookfield à 100°C, avec une aiguille 27 tournant à raison de 20 tr/min).

Cette composition comprend au moins 85 % poids/poids de polyuréthanes à terminaisons alkoxysilanes hydrolysables de formule (I).

La part pondérale de cette composition qui est obtenue à partir de matières premières renouvelables est de 70,3 % poids/poids.

Exemple 1 (selon l'invention) :

1) Préparation d'une composition adhésive réticulable par chauffage, à base de la composition de polyuréthanes à terminaisons alkoxysilanes hydrolysables de l'exemple A :

La composition figurant dans le tableau suivant est préparée en introduisant tout d'abord la résine tackifiante Dertoline® G2L dans un réacteur en verre sous vide, sous agitation et chauffé à environ 130 °C. Puis, une fois la résine bien fondue, la composition (A) de l'exemple A est ajoutée.

Le mélange est agité sous vide durant 45 minutes, puis refroidi à 100 °C. Le mélange est agité sous vide durant 20 minutes, puis refroidi à 80 °C. Le catalyseur (K-KAT® 5218) est ensuite introduit en même temps que les antioxydants Irganox® 245 et Irganox® 1010. L'agent dessicant (Silquest A-174) est ajouté si besoin, puis le mélange est maintenu sous vide et sous agitation durant 10 minutes supplémentaires.

La viscosité Brookfield de la composition ainsi obtenue est indiquée dans le tableau.

La part pondérale de cette composition qui est obtenue à partir de matières premières renouvelables est calculée à partir de :

- la part pondérale de la composition de l'exemple A qui est obtenue à partir de matières premières renouvelables, pondérée par la teneur de ladite composition dans la composition du présent exemple et de
- la teneur dans la composition du présent exemple de la Dertoline G2L qui est elle-même à 100 % d'origine renouvelable.

La part pondérale obtenue par calcul est indiquée en % poids/poids dans le tableau.

2) Préparation d'une couche support PET revêtue de la composition réticulée, à raison d'un grammage égal à 50 g/m$^2$ :

On utilise comme couche support une feuille rectangulaire de PolyEthylèneTéréphtalate (PET) d'épaisseur 50 $\mu$m et de dimensions 20 cm sur 40 cm.

On préchauffe la composition obtenue en 1) à une température proche de 100 °C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 50 g/m$^2$, ce qui représente environ une épaisseur de l'ordre de 50 $\mu$m.

La feuille de PET ainsi revêtue est alors placée dans une étuve à 120 °C durant 8 minutes pour la réticulation de la composition, puis contrecollée sur une couche anti-adhérente protectrice consistant en une feuille de film siliconé, rectangulaire et de mêmes dimensions.

La couche support PET ainsi obtenue est soumise aux tests décrits ci-après.

Test de pelage à 180° sur plaque d'acier inoxydable :

Le pouvoir adhésif est évalué par le test de pelage (ou peel) à 180° sur plaque d'acier inoxydable tel que décrit dans la méthode FINAT n° 1, publiée dans le Manuel Technique FINAT 6$^{ème}$ édition, 2001. FINAT est la fédération internationale des fabricants et transformateurs d'étiquettes auto-adhésives. Le principe de ce test est le suivant.

Une éprouvette sous forme de bande rectangulaire (25 mm x 175 mm) est découpée dans la couche support PET revêtu de la composition réticulée obtenue précédemment. Cette éprouvette est fixée sur les 2/3 de sa longueur (après enlèvement de la portion de couche anti-adhérente protectrice correspondante), sur un substrat constitué d'une plaque d'acier inoxydable. L'assemblage obtenu est laissé 20 minutes à température ambiante. Il est alors placé dans

un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions.

Le résultat correspondant est exprimé en N/cm et indiqué dans le tableau suivant.

Test d'adhésion instantanée (également dénommé test de la boucle) :

Le pouvoir collant immédiat ou tack est évalué par le test d'adhésion instantanée dit de la boucle, décrit dans la méthode FINAT n° 9, dont le principe est le suivant.

Une éprouvette sous forme de bande rectangulaire (25 mm x 175 mm) est découpée dans la couche support PET revêtu de la composition réticulée obtenue précédemment. Après enlèvement de la totalité de la couche anti-adhérente protectrice, les 2 extrémités de cette bande sont jointes de manière à former une boucle dont la couche adhésive est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque.

Le résultat correspondant est exprimé en $N/cm^2$ et indiqué dans le tableau suivant.

Temps de résistance du joint de colle au cisaillement statique à 90°C :

Le maintien à température élevée du pouvoir adhésif de la couche support PET obtenue précédemment en 2) est évalué par un test qui détermine le temps de résistance du joint de colle au cisaillement statique à 90°C. Il est fait référence pour ce test à la méthode FINAT n° 8. Le principe est le suivant.

Une éprouvette sous forme de bande rectangulaire (25 mm x 75 mm) est découpée dans chacune des 2 couche support PET précédentes. Après enlèvement de la totalité de la couche anti-adhérente protectrice, une portion carrée de 25 mm de côté située à l'extrémité de la bande adhésive est fixée sur une plaque de verre.

La plaque d'essai ainsi obtenue est introduite, au moyen d'un support approprié, en position sensiblement verticale dans une étuve à 90°C, la partie non collée de la bande de longueur 50 mm se situant en dessous de la plaque. Après équilibrage thermique, la partie restée libre de la bande est reliée à une masse de 1 kg, l'ensemble du dispositif restant toujours durant la durée du test maintenu dans l'étuve à 90°C.

Sous l'effet de cette masse, le joint de colle qui assure la fixation de la bande sur la plaque est soumis à une contrainte de cisaillement. Pour mieux contrôler cette contrainte, la plaque d'essai est en fait placée de sorte à faire un angle de 2° par rapport à la verticale.

On note le temps au bout duquel la bande se décroche de la plaque à la suite de la rupture du joint de colle sous l'effet de cette contrainte.

Ce temps est indiqué dans le tableau suivant.

Exemples 2 à 6 (selon l'invention) et 7-8 (comparatifs) :

On répète l'exemple 1 avec les compositions indiquées dans le tableau suivant.

Les résultats obtenus sont également indiqués dans le tableau.

| Ingrédient | | Teneur en % poids/poids | | | | | | | |
|---|---|---|---|---|---|---|---|---|---|
| | | Ex. 1 | Ex. 2 | Ex. 3 | Ex. 4 | Ex. 5 | Ex. 6 | Ex. 7 (comp.) | Ex. 8 (comp.) |
| (a) Composition (A) | Nature de (A) | Ex. A | Ex. A | Ex. A | Ex. A | Ex. B | Ex. C | Ex. A | Ex. A |
| | Teneur en (A) | 61,11 | 51,12 | 41,11 | 38,62 | 38,62 | 38,62 | 20 | 85,0 |
| (b) Dertoline® G2L | | 36,16 | 46,15 | 56,16 | 46,50 | 46,50 | 46,50 | 77,27 | 12,27 |
| (c) K-KAT® 5218 | | 2 | 2 | 2 | 0,50 | 0,50 | 0,50 | 2 | 2 |
| GENIOSIL® STP-E30 | | 0 | 0 | 0 | 13,15 | 13,15 | 13,15 | 0 | 0 |

(suite)

| Ingrédient | Teneur en % poids/poids | | | | | | | |
|---|---|---|---|---|---|---|---|---|
| | Ex. 1 | Ex. 2 | Ex. 3 | Ex. 4 | Ex. 5 | Ex. 6 | Ex. 7 (comp.) | Ex. 8 (comp.) |
| Irganox® 245 + Irganox® 1010 | 0,73 | 0,73 | 0,73 | 0,73 | 0,73 | 0,73 | 0,73 | 0,73 |
| Silquest® A-174 | 0 | 0 | 0 | 0,5 | 0,50 | 0,50 | 0 | 0 |
| Viscosité Brookfield à 100°C (Pa.s) | 12,1 | 29 | 13,1 | 9,6 | 38,7 | 40 | 9,6 | 8,6 |
| Part pondérale d'origine renouvelable (% poids/poids) | 79 | 82 | 85 | 73 | 77 | 73 | 91 | 72 |
| Pelage à 180° (N/cm) | 2,9 | 7,2 | 9,1 | 5,9 | 5,2 | 5 | 0,0 | 0,4 |
| Adhésion instantanée ($N/cm^2$) | 1,7 | 4,1 | 0,4 | 3,5 | 2,9 | 3 | 0,1 | 0,3 |
| Temps de résistance du joint de colle au cisaillement statique à 90°C | > 24 heures | > 24 heures | > 24 heures | > 24 heures | > 24 heures | > 24 heures | < 6' | < 1' |

## Revendications

**1.** Composition adhésive réticulable par chauffage comprenant :

- (a) de 35 à 75 % poids/poids d'une composition (A) comprenant au moins 90 % poids/poids de polyuréthanes à terminaisons alkoxysilanes hydrolysables de formule (I) :

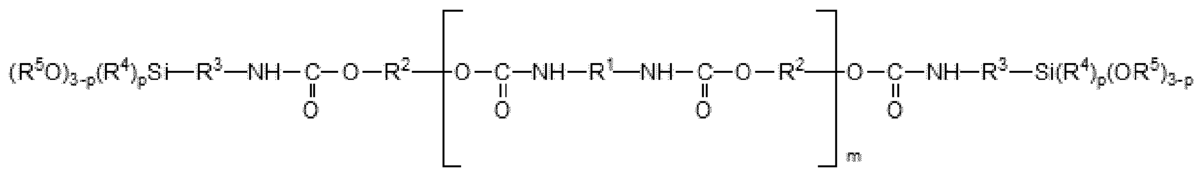

(I)

dans laquelle :

- $R^1$ représente un radical divalent hydrocarboné comprenant de 5 à 15 atomes de carbone qui peut être aromatique ou aliphatique, linéaire, ramifié ou cyclique;
- $R^2$ représente un bloc polyester divalent qui est dérivé d'un polyester diol de formule $R^2(OH)_2$ par remplacement de chacun des 2 groupes hydroxyle par une valence libre ;
- $R^3$ représente un radical divalent alkylène linéaire comprenant de 1 à 3 atomes de carbone ;
- $R^4$ et $R^5$, identiques ou différents, représentent chacun un radical alkyle linéaire ou ramifié de 1 à 4 atomes de carbone, avec la possibilité lorsqu'il y a plusieurs radicaux $R^4$ (ou $R^5$) que ceux-ci soient identiques ou différents ;
- m est un nombre entier tel que la masse molaire moyenne en nombre des polyuréthanes de formule (I) est comprise entre 900 Da et 27 kDa ;
- p est un nombre entier égal à 0, 1 ou 2 ;

ladite composition (A) étant obtenue en outre par un procédé qui comprend une étape de préparation d'une composition (A-1) de polyesters diols de formule $R^2(OH)_2$ en faisant réagir par une réaction de polycondensation :

- (i) un ou plusieurs acides gras dimérisés compris dans une composition (A-1-1) ayant un indice d'acide $I_A$ compris entre 190 et 200 mg KOH/g avec un ou plusieurs diols comprenant de 2 à 44 atomes de carbone et éventuellement un ou plusieurs hétéroatomes choisis parmi l'oxygène et le soufre ; ou bien
- (ii) un ou plusieurs alcool gras dimérisés compris dans une composition (A-1-2) ayant un indice d'hydroxyle $I_{OH}$ compris entre 200 et 220 mg KOH/g avec un ou plusieurs acides dicarboxyliques comprenant de 4 à 44 atomes de carbone et éventuellement un ou plusieurs hétéroatomes choisis parmi l'oxygène et le soufre ;

de telle sorte que ladite composition (A-1) ait un indice d'hydroxyle $I_{OH}$ compris entre 15 et 35 mg KOH/g et une viscosité Brookfield mesurée à 80°C inférieure à 10 Pa.s ;
- (b) de 22 à 62 % poids/poids d'une résine tackifiante compatible (B) de masse molaire moyenne en nombre comprise entre 200 Da et 10 kDa ; et
- (c) de 0,01 à 3 % poids/poids d'un catalyseur de réticulation (C).

**2.** Composition adhésive selon la revendication 1, **caractérisée en ce que**, lorsque la composition (A-1) de polyesters diols de formule $R^2(OH)_2$ est obtenue selon la variante (i), la la composition (A-1-1) est une composition comprenant de 95 à 98 % d'acides gras dimérisés dont l'indice d'acide $I_A$ est compris entre 194 et 198 mg KOH/g.

**3.** Composition adhésive selon la revendication 1, **caractérisée en ce que**, lorsque la composition (A-1) de polyesters diols de formule $R^2(OH)_2$ est obtenue selon la variante (ii), la composition (A-1-2) est une composition comprenant au moins 96 % d'alcools gras dimérisés aliphatiques dont l'$I_{OH}$ est compris entre 202 et 212 mg KOH/g.

**4.** Composition adhésive selon l'une des revendications 1 à 3, **caractérisée en ce que** la composition (A-1) de polyesters diols de formule $R^2(OH)_2$ a un indice d'hydroxyle $I_{OH}$ compris entre 16 et 25 mg KOH/g et une viscosité Brookfield mesurée à 80°C inférieure à 6 Pa.s.

**5.** Composition adhésive selon l'une des revendications 1 à 4, **caractérisée en ce que** le radical $R^1$ est choisi parmi l'un des radicaux divalents suivants dont les formules ci-dessous font apparaître les 2 valences libres :

- a) le radical divalent dérivé de l'isophorone :

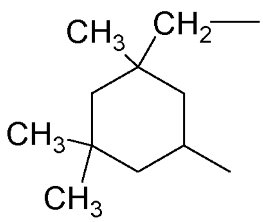

- b)

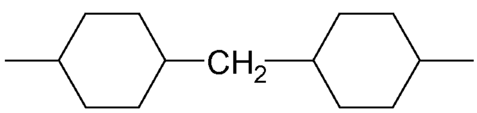

- c)

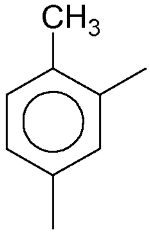

ou

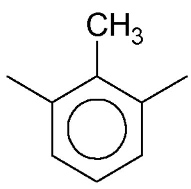

- d)

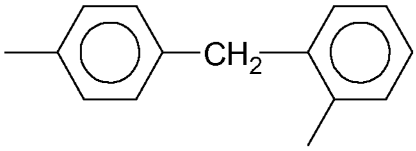

ou

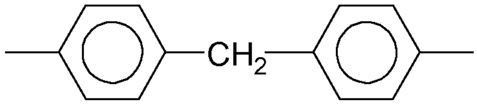

- e)

$$-(CH_2)_6-$$

(ou radical hexaméthylène).

**6.** Composition adhésive selon l'une des revendications 1 à 5, **caractérisée en ce que** le radical $R^1$ est le radical divalent dérivé de l'isophorone.

**7.** Composition adhésive selon l'une des revendications 1 à 6, **caractérisée en ce que** :

- $R^3$ est le radical divalent méthylène ou n-propylène ;
- $R^4$ et $R^5$ représentent chacun le radical méthyle ou éthyle ; et/ou
- p égale 0 ou 1.

**8.** Composition adhésive selon l'une des revendications 1 à 7, **caractérisée en ce que** la résine tackifiante (B) est choisie parmi :

- (iii) les colophanes d'origine naturelle ou modifiées (telles que par exemple la colophane extraite de la gomme de pins, la colophane de bois extraite des racines de l'arbre) et leurs dérivés hydrogénés, dimérisés, polymérisés ou estérifiés par des monoalcools ou des polyols (comme le glycérol) ; ou
- (v) les résines terpéniques, résultant généralement de la polymérisation d'hydrocarbures terpéniques comme par exemple le mono-terpène (ou pinène) en présence de catalyseurs de Friedel-Crafts.

**9.** Composition adhésive selon l'une des revendications 1 à 8, **caractérisée en ce qu'**elle comprend :

- (a) de 40 à 65 % poids/poids de composition (A),
- (b) de 33 à 58 % poids/poids de résine tackifiante (B), et
- (c) de 0,45 à 2,5% poids/poids de catalyseur de réticulation (C).

**10.** Composition adhésive selon l'une des revendications 1 à 9, **caractérisée en ce qu'**elle comprend en outre jusqu'à 15 % poids/poids d'un polymère de formule (V) :

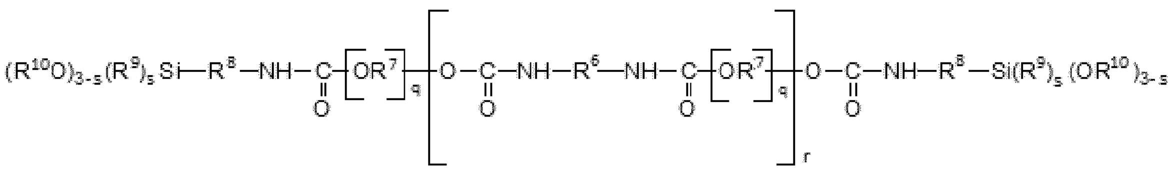

(V)

dans laquelle :

- $R^6$ représente un radical divalent hydrocarboné comprenant de 5 à 15 atomes de carbone qui peut être aromatique ou aliphatique, linéaire, ramifié ou cyclique;
- $R^7$ représente un radical divalent alkylène linéaire ou ramifié comprenant de 1 à 4 atomes de carbone ;
- $R^8$ représente un radical divalent alkylène linéaire comprenant de 1 à 3 atomes de carbone ;
- $R^9$ et $R^{10}$, identiques ou différents, représentent chacun un radical alkyle linéaire ou ramifié de 1 à 4 atomes de carbone, avec la possibilité lorsqu'il y a plusieurs radicaux $R^9$ (ou $R^{10}$) que ceux-ci soient identiques ou différents ;

- q est un nombre entier tel que la masse molaire moyenne en nombre du bloc polyéther de formule $-[OR^7]_q-$ est comprise entre 300 Da et 30 kDa ;
- r est ou bien égal à 0 ou bien un nombre entier non nul tel que la masse molaire moyenne en nombre du polymère de formule (V) est comprise entre 600 Da et 60 kDa ;
- s est un nombre entier égal à 0, 1 ou 2.

**11.** Composition adhésive selon la revendication 10, **caractérisée en ce que** le polymère de formule (V) est tel que r égale 0.

**12.** Composition adhésive selon l'une des revendications 10 ou 11, **caractérisée en ce que** le polymère de formule (V) est tel que :

- $R^7$ est le radical isopropylène ;
- $R^8$ est le radical méthylène ;
- s = 0 ou 1 ; et
- $R^9$ et $R^{10}$ représentent chacun le radical méthyle.

**13.** Composition adhésive selon l'une des revendications 1 à 12, **caractérisée en ce que** sa viscosité Brookfield mesurée à 100°C est comprise entre 9 et 100 Pa.s.

**14.** Support auto-adhésif susceptible d'être obtenu par le procédé comprenant :

- (a) le préchauffage à une température comprise entre 50 et 130°C de la composition adhésive telle que définie dans l'une des revendications 1 à 13, puis
- (b) son enduction sur une couche support, puis
- (c) sa réticulation, par chauffage du support ainsi enduit à une température comprise entre 50 et 150°C.

**15.** Utilisation du support auto-adhésif défini précédemment pour la fabrication d'étiquettes et/ou rubans auto-adhésifs à simple ou double face.

**Patentansprüche**

**1.** Wärmevernetzbare Klebstoffzusammensetzung, die Folgendes umfasst:

- (a) 35 bis 75 % (w/w) einer Zusammensetzung (A), umfassend mindestens 90 % (w/w) Polyurethane mit hydrolysierbaren Alkoxysilantermini der Formel (I):

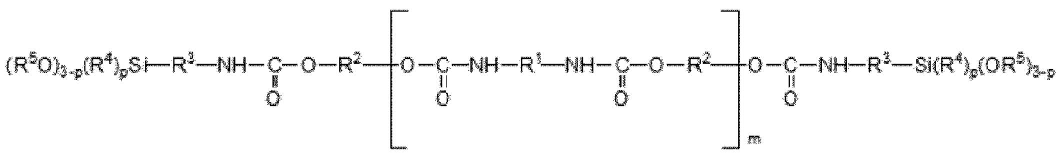

(I)

wobei:

- $R^1$ für einen zweiwertigen Kohlenwasserstoffrest steht, umfassend 5 bis 15 Kohlenstoffatome, der aromatisch oder aliphatisch, geradkettig, verzweigt oder zyklisch sein kann;
- $R^2$ für einen zweiwertigen Polyesterblock steht, der sich von einem Polyesterdiol der Formel $R^2(OH)_2$ durch Ersatz jeder der 2 Hydroxylgruppen durch eine freie Valenz ableitet;
- $R^3$ für einen geradkettigen zweiwertigen Alkylenrest steht, der 1 bis 3 Kohlenstoffatome umfasst;
- $R^4$ und $R^5$, gleich oder verschieden, jeweils für einen geradkettigen oder verzweigten Alkylrest mit 1 bis 4 Kohlenstoffatomen stehen, wobei im Falle mehrerer $R^4$- (oder $R^5$-)Reste die Möglichkeit besteht, dass diese gleich oder verschieden sind;
- m eine ganze Zahl ist, derart, dass die zahlenmittlere Molmasse der Polyurethane der Formel (I) im Bereich zwischen 900 Da und 27 kDa liegt;

- p eine ganze Zahl ist, die gleich 0, 1 oder 2 ist;

wobei die Zusammensetzung (A) außerdem durch ein Verfahren erhalten wird, das einen Schritt der Herstellung einer Zusammensetzung (A-1) von Polyesterdiolen der Formel $R^2(OH)_2$ durch Umsetzung von:

- (i) einer oder mehrerer dimerisierter Fettsäuren, die in einer Zusammensetzung (A-1-1) mit einer Säurezahl SZ zwischen 190 und 200 mg KOH/g enthalten sind, mit einem oder mehreren Diolen mit 2 bis 44 Kohlenstoffatomen und gegebenenfalls einem oder mehreren Heteroatomen, die aus Sauerstoff und Schwefel ausgewählt sind; oder auch
- (ii) einem oder mehreren dimerisierten Fettalkoholen, die in einer Zusammensetzung (A-1-2) mit einer Hydroxylzahl OHZ zwischen 200 und 220 mg KOH/g enthalten sind, mit einer oder mehreren Dicarbonsäuren mit 4 bis 44 Kohlenstoffatomen und gegebenenfalls einem oder mehreren Heteroatomen, die aus Sauerstoff und Schwefel ausgewählt sind;

durch eine Polykondensationsreaktion umfasst, derart, dass die Zusammensetzung (A-1) eine Hydroxylzahl OHZ zwischen 15 und 35 mg KOH/g und eine bei 80°C gemessene Brookfield-Viskosität von weniger als 10 Pa.s aufweist;

- (b) 22 bis 62 % (w/w) eines verträglichen Klebrigmacherharzes (B) mit einer zahlenmittleren Molmasse im Bereich zwischen 200 Da und 10 kDa; und
- (c) 0,01 bis 3 % (w/w) eines Vernetzungskatalysators (C).

2. Klebstoffzusammensetzung nach Anspruch 1, **dadurch gekennzeichnet, dass** dann, wenn die Zusammensetzung (A-1) von Polyesterdiolen der Formel $R^2(OH)_2$ gemäß Variante (i) erhalten wird, die Zusammensetzung (A-1-1) eine Zusammensetzung ist, die 95 bis 98 % dimerisierte Fettsäuren umfasst, deren Säurezahl SZ zwischen 194 und 198 mg KOH/g liegt.

3. Klebstoffzusammensetzung nach Anspruch 1, **dadurch gekennzeichnet, dass** dann, wenn die Zusammensetzung (A-1) von Polyesterdiolen der Formel $R^2(OH)_2$ gemäß Variante (ii) erhalten wird, die Zusammensetzung (A-1-2) eine Zusammensetzung ist, die mindestens 96 % aliphatische dimerisierte Fettalkohole umfasst, deren OHZ zwischen 202 und 212 mg KOH/g liegt.

4. Klebstoffzusammensetzung nach einem der Ansprüche 1 bis 3, **dadurch gekennzeichnet, dass** die Zusammensetzung (A-1) von Polyesterdiolen der Formel $R^2(OH)_2$ eine Hydroxylzahl OHZ zwischen 16 und 25 mg KOH/g und eine bei 80°C gemessene Brookfield-Viskosität von weniger als 6 Pa.s aufweist.

5. Klebstoffzusammensetzung nach einem der Ansprüche 1 bis 4, **dadurch gekennzeichnet, dass** der Rest $R^1$ ausgewählt ist aus einem der folgenden zweiwertigen Reste, wobei die nachfolgenden Formeln die 2 freien Valenzen erkennen lassen:

- a) dem von Isophoron abgeleiteten zweiwertigen Rest:

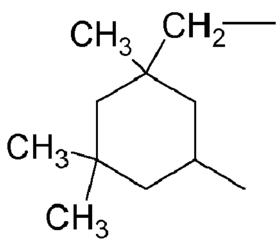

- b)

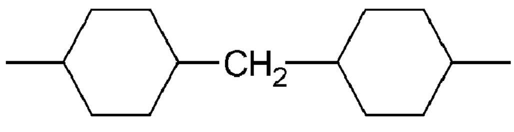

- c)

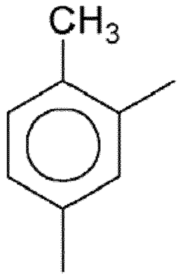

oder

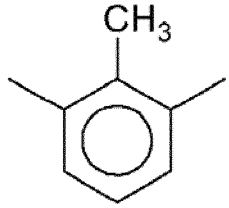

- d)

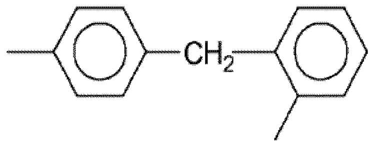

oder

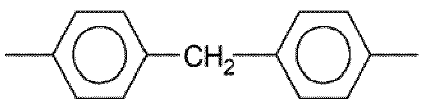

- e)

$-(CH_2)_6-$

(oder dem Hexamethylenrest).

**6.** Klebstoffzusammensetzung nach einem der Ansprüche 1 bis 5, **dadurch gekennzeichnet, dass** der Rest $R^1$ der von Isophoron abgeleitete zweiwertige Rest ist.

**7.** Klebstoffzusammensetzung nach einem der Ansprüche 1 bis 6, **dadurch gekennzeichnet, dass**:

- $R^3$ der zweiwertige Methylen- oder n-Propylenrest ist;
- $R^4$ und $R^5$ jeweils für den Methyl- oder Ethylrest stehen; und/oder
- p gleich 0 oder 1 ist.

**8.** Klebstoffzusammensetzung nach einem der Ansprüche 1 bis 7, **dadurch gekennzeichnet, dass** das Klebrigmacherharz (B) aus den Folgenden ausgewählt ist:

- (iii) den Kolophoniumstoffen, die natürlichen Ursprungs oder modifiziert sind (wie zum Beispiel das aus Fichtengummi extrahierte Kolophonium, aus Baumwurzeln extrahiertes Holz-Kolophonium), und ihren hydrierten, dimerisierten, polymerisierten oder mit Monoalkoholen oder Polyolen (wie Glycerol), veresterten Derivaten; oder
- (v) Terpenharzen, die im Allgemeinen aus der Polymerisation von Terpenkohlenwasserstoffen, wie zum Beispiel Monoterpen (oder Pinen), in Gegenwart von Friedel-Crafts-Katalysatoren resultieren.

**9.** Klebstoffzusammensetzung nach einem der Ansprüche 1 bis 8, **dadurch gekennzeichnet, dass** sie Folgendes umfasst:

- (a) 40 bis 65 % (w/w) der Zusammensetzung (A),
- (b) 33 bis 58 % (w/w) Klebrigmacherharz (B) und
- (c) 0,45 bis 2,5 % (w/w) Vernetzungskatalysator (C).

**10.** Klebstoffzusammensetzung nach einem der Ansprüche 1 bis 9, **dadurch gekennzeichnet, dass** sie außerdem bis zu 15 % (w/w) eines Polymers der Formel (V) umfasst:

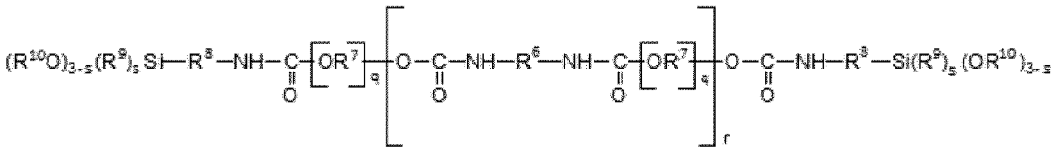

(V)

wobei:

- $R^6$ für einen zweiwertigen Kohlenwasserstoffrest steht, umfassend 5 bis 15 Kohlenstoffatome, der aromatisch oder aliphatisch, geradkettig, verzweigt oder zyklisch sein kann;
- $R^7$ für einen geradkettigen oder verzweigten zweiwertigen Alkylenrest mit 1 bis 4 Kohlenstoffatomen steht;
- $R^8$ für einen geradkettigen zweiwertigen Alkylenrest mit 1 bis 3 Kohlenstoffatomen steht;
- $R^9$ und $R^{10}$, gleich oder verschieden, jeweils für einen geradkettigen oder verzweigten Alkylrest mit 1 bis 4 Kohlenstoffatomen stehen, wobei im Falle mehrerer $R^9$- (oder $R^{10}$-)Reste die Möglichkeit besteht, dass diese gleich oder verschieden sind;
- q eine ganze Zahl ist, derart, dass die zahlenmittlere Molmasse des Polyetherblocks der Formel $-[OR^7]_q-$ zwischen 300 Da und 30 kDa liegt;
- r entweder gleich 0 ist oder eine von Null verschiedene ganze Zahl ist, derart, dass die zahlenmittlere Molmasse des Polymers der Formel (V) zwischen 600 Da und 60 kDa liegt;
- s eine ganze Zahl mit einem Wert von 0, 1 oder 2 ist.

**11.** Klebstoffzusammensetzung nach Anspruch 10, **dadurch gekennzeichnet, dass** das Polymer der Formel (V) derart ist, dass r gleich 0 ist.

**12.** Klebstoffzusammensetzung nach einem der Ansprüche 10 bis 11, **dadurch gekennzeichnet, dass** das Polymer der Formel (V) derart ist, dass:

- $R^7$ für den Isopropylenrest steht;
- $R^8$ für den Methylenrest steht;
- s = 0 oder 1; und
- $R^9$ und $R^{10}$ jeweils für den Methylrest stehen.

**13.** Klebstoffzusammensetzung nach einem der Ansprüche 1 bis 12, **dadurch gekennzeichnet, dass** ihre Brookfield-Viskosität, gemessen bei 100 °C, im Bereich zwischen 9 und 100 Pa.s liegt.

**14.** Selbstklebeträger, der mittels des Verfahrens erhalten werden kann, das Folgendes umfasst:

- (a) Vorheizen der Klebstoffzusammensetzung gemäß der Begriffsbestimmung in einem der Ansprüche 1 bis 13 auf eine Temperatur im Bereich von 50 bis 130 °C, und dann
- (b) schichtförmiges Aufbringen derselben auf eine Trägerschicht, und dann
- (c) Vernetzen derselben, durch Erwärmen des auf diese Weise beschichteten Trägers, auf eine Temperatur im Bereich von 50 bis 150 °C.

**15.** Verwendung des Selbstklebeträgers gemäß der vorhergehenden Begriffsbestimmung zur Herstellung von einseitigen oder beidseitigen selbstklebenden Etiketten und/oder Bändern.

## Claims

**1.** Heat-curable adhesive composition comprising:

- (a) from 35% to 75% weight/weight of a composition (A) comprising at least 90% weight/weight of polyurethanes bearing hydrolysable alkoxysilane end groups of formula (I):

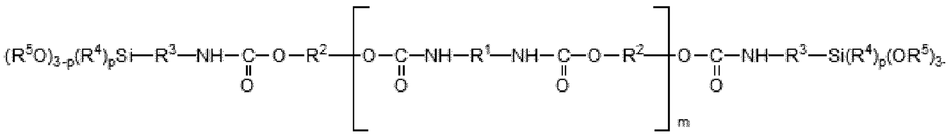

(I)

in which:

- $R^1$ represents a divalent hydrocarbon-based radical comprising from 5 to 15 carbon atoms which may be aromatic or aliphatic, and linear, branched or cyclic;
- $R^2$ represents a divalent polyester block which is derived from a polyester diol of formula $R^2(OH)_2$ by replacing each of the two hydroxyl groups with a free valency;
- $R^3$ represents a linear divalent alkylene radical comprising from 1 to 3 carbon atoms;
- $R^4$ and $R^5$, which may be identical or different, each represent a linear or branched alkyl radical of 1 to 4 carbon atoms, with the possibility when there are several radicals $R^4$ (or $R^5$) of them being identical or different;
- m is an integer such that the number-average molar mass of the polyurethanes of formula (I) is between 900 Da and 27 kDa;
- p is an integer equal to 0, 1 or 2;

the said composition (A) also being obtained via a process which comprises a step of preparing a composition (A-1) of polyester diols of formula $R^2(OH)_2$ by reacting via a polycondensation reaction:

- (i) one or more dimerized fatty acids included in a composition (A-1-1) with an acid number $I_A$ of between 190 and 200 mg KOH/g with one or more diols comprising from 2 to 44 carbon atoms and optionally one or more heteroatoms chosen from oxygen and sulfur; or
- (ii) one or more dimerized fatty alcohols included in a composition (A-1-2) with a hydroxyl number $I_{OH}$ of between 200 and 220 mg KOH/g with one or more dicarboxylic acids comprising from 4 to 44 carbon atoms and optionally one or more heteroatoms chosen from oxygen and sulfur;

such that the said composition (A-1) has a hydroxyl number $I_{OH}$ of between 15 and 35 mg KOH/g and a Brookfield viscosity measured at 80°C of less than 10 Pa.s;
- (b) from 22% to 62% weight/weight of a compatible tackifying resin (B) with a number-average molar mass of between 200 Da and 10 kDa; and
- (c) from 0.01% to 3% weight/weight of a crosslinking catalyst (C).

2. Adhesive composition according to Claim 1, **characterized in that**, when composition (A-1) of polyester diols of formula $R^2(OH)_2$ is obtained according to variant (i), composition (A-1-1) is a composition comprising from 95% to 98% of dimerized fatty acids with an acid number $I_A$ of between 194 and 198 mg KOH/g.

3. Adhesive composition according to Claim 1, **characterized in that** when composition (A-1) of polyester diols of formula $R^2(OH)_2$ is obtained according to variant (ii), composition (A-1-2) is a composition comprising at least 96% of aliphatic dimerized fatty alcohols with an $I_{OH}$ of between 202 and 212 mg KOH/g.

4. Adhesive composition according to one of Claims 1 to 3, **characterized in that** composition (A-1) of polyester diols of formula $R^2(OH)_2$ has a hydroxyl number $I_{OH}$ of between 16 and 25 mg KOH/g and a Brookfield viscosity measured at 80°C of less than 6 Pa.s.

5. Adhesive composition according to one of Claims 1 to 4, **characterized in that** the radical $R^1$ is chosen from one of the following divalent radicals, of which the formulae below reveal the two free valencies:

- a) the divalent radical derived from isophorone:

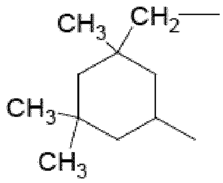

- b)

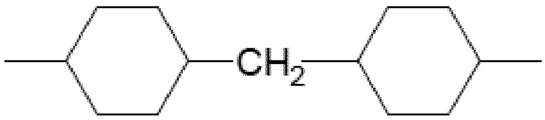

- c)

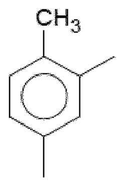

or

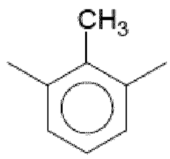

- d)

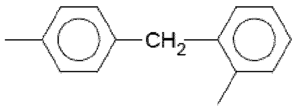

or

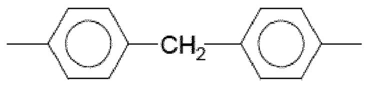

- e) $-(CH_2)_6-$ (or hexamethylene radical).

6. Adhesive composition according to one of Claims 1 to 5, **characterized in that** the radical $R^1$ is the divalent radical derived from isophorone.

7. Adhesive composition according to one of Claims 1 to 6, **characterized in that**:

- $R^3$ is the methylene or n-propylene divalent radical;
- $R^4$ and $R^5$ each represent a methyl or
ethyl radical; and/or
- p equals 0 or 1.

8. Adhesive composition according to one of Claims 1 to 7, **characterized in that** the tackifying resin (B) is chosen from:

- (iii) rosins of natural or modified origin (for instance rosin extracted from pine gum, wood rosin extracted from tree roots) and hydrogenated, dimerized or polymerized derivatives thereof or derivatives esterified with monoalcohols or polyols (such as glycerol); or
- (v) terpenic resins, generally resulting from the polymerization of terpenic hydrocarbons, for instance monoterpene (or pinene) in the presence of Friedel-Crafts catalysts.

9. Adhesive composition according to one of Claims 1 to 8, **characterized in that** it comprises:

- (a) from 40% to 65% weight/weight of composition (A),
- (b) from 33% to 58% weight/weight of tackifying resin (B), and
- (c) from 0.45% to 2.5% weight/weight of crosslinking catalyst (C).

10. Adhesive composition according to one of Claims 1 to 9, **characterized in that** it also comprises up to 15% weight/weight of a polymer of formula (V):

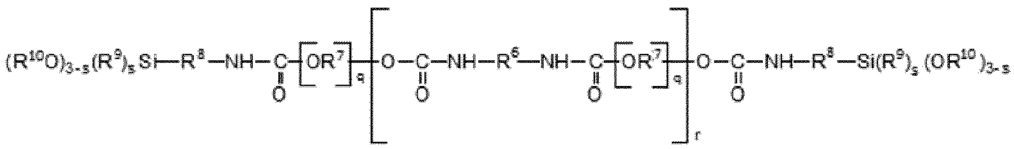

(V)

in which:

- $R^6$ represents a divalent hydrocarbon-based radical comprising from 5 to 15 carbon atoms, which may be aromatic or aliphatic, and linear, branched or cyclic;
- $R^7$ represents a linear or branched divalent alkylene radical comprising from 1 to 4 carbon atoms;
- $R^8$ represents a linear divalent alkylene radical comprising from 1 to 3 carbon atoms;
- $R^9$ and $R^{10}$, which may be identical or different, each represent a linear or branched alkyl radical of 1 to 4 carbon atoms, with the possibility, when there are several radicals $R^9$ (or $R^{10}$), of them being identical or different;
- q is an integer such that the number-average molar mass of a polyether block of formula-$[OR^7]_q$- is between 300 Da and 30 kDa;
- r is either equal to zero or to a non-zero integer such that the number-average molar mass of the polymer of formula (V) is between 600 Da and 60 kDa;
- s is an integer equal to 0, 1 or 2.

**11.** Adhesive composition according to Claim 10, **characterized in that** the polymer of formula (V) is such that r equals 0.

**12.** Adhesive composition according to either of Claims 10 and 11, **characterized in that** the polymer of formula (V) is such that:

- $R^7$ is the isopropylene radical;
- $R^8$ is the methylene radical;
- s = 0 or 1; and
- $R^9$ and $R^{10}$ each represent the methyl radical.

**13.** Adhesive composition according to one of Claims 1 to 12, **characterized in that** its Brookfield viscosity measured at 100°C is between 9 and 100 Pa.s.

**14.** Self-adhesive support that may be obtained via the process comprising:

- (a) preheating to a temperature of between 50 and 130°C of the adhesive composition as defined in one of Claims 1 to 13, and then
- (b) coating it on a support layer, and then
- (c) curing it, by heating the support thus coated to a temperature of between 50 and 150°C.

**15.** Use of the self-adhesive support defined previously for the manufacture of one-sided or two-sided self-adhesive labels and/or tapes.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 09106699 A
- EP 2336208 A
- WO 0104080 A
- WO 2009106699 A